# EUROPEAN PATENT APPLICATION

(11) **EP 1 150 402 A2**
(43) Date of publication of application: **31.10.2001**
(21) Application number: 01303664.5
(22) Date of filing: 20.04.2001
(51) Int. Cl.: H01S 3/091, H01S 3/102

(54) **Laser processing apparatus**

(30) Priority: 25.04.2000 JP 2000123591
(71) Applicant: MIYACHI TECHNOS CORPORATION, Noda-shi, Chiba-ken (JP)
(72) Inventor: Niu, Zeng Qiang, Noda-shi, Chiba-ken (JP); Kawamura, Kouji, Noda-shi, Chiba-ken (JP)
(74) Representative: Makovski, Priscilla Mary

(57) **Abstract**

When an IGBT (insulated gate bipolar transistor (32)) turns on, a current from a laser power supply unit (102) is supplied via a switching element (32) to an excitation lamp (20) of a laser oscillation unit (100) so that the excitation lamp (20) lights to oscillatorily output a laser beam LB. A switching control unit (50) uses as a main feedback signal a measured-value-of-laser-output signal SL from a laser output measurement unit (38) and uses as a sub-feedback signal for correction an AC component SPc (SIc) of a lamp measured-value-of-power signal SP from a power computing circuit (44) or of a measured-value-of-lamp-current signal SI from a current measuring circuit (46). The switching control unit (50) compares the feedback signals SL, SPc (SIc) with a reference signal S_{ref} having a desired pulse waveform from a CPU (34) to obtain a comparison error. The switching control unit (50) then generates a switching control signal SW for e.g., PWM so as to nullify the comparison error and provides a switching control of the IGBT (32) via a drive circuit (52) in response to the switching control signal SW.

## Description

### BACKGROUND OF THE INVENTION

### 1. Field of the Invention

The present invention relates to a waveform-controlled laser processing apparatus.

### 2. Description of the Related Art

Up until now, in a laser processing apparatus effecting laser processing such as welding, cutting, etc., by irradiation of pulsed laser beams onto workpieces, use is made of technique for variably controlling waveforms of the laser output of the pulsed laser light so as to meet a diversity of processing demands.

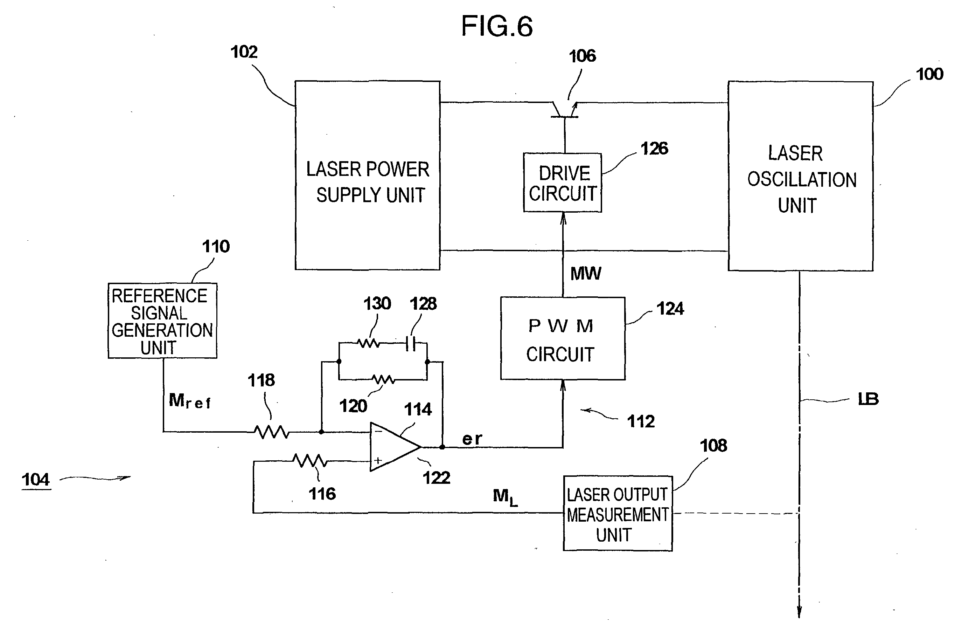

Fig. 6 shows a major configuration of a conventional waveform-controlled laser processing apparatus. The laser processing apparatus comprises a laser oscillation unit 100, a laser power supply unit 102 and a control unit 104. The laser power supply unit 102 is electrically connected via a switching element 106 typically formed of a transistor to an excitation light source not shown of a laser oscillation unit 100 so that a DC power or current supplied from the laser power supply unit 102 to the excitation light source is waveform controlled by providing a feedback switching control of the switching element 106 by the control unit 104. The laser oscillation unit 100 excites a solid-state laser medium not shown by energy of a light emitted from the excitation light source, to thereby oscillatorily output a laser beam LB having a controlled laser output (light intensity) waveform.

In order to effect the above laser output waveform control, the control unit 104 includes a laser output measurement unit 108 for measuring an output of the laser beam LB, and a switching control unit 112 for providing a switching control of the switching element 106 on the basis of an error between a feedback signal which is a measured-value-of-laser-output signal ML from the laser output measurement unit 108 and a reference signal M_{ref} from a reference signal generation unit 110.

In the switching control unit 112, an error amplifier 122 consisting of an operational amplifier 114, input resistors 116 and 118 and a feedback resistor 120 compares levels of the two signals ML and M_{ref} with each other to generate an error signal er indicative of the error or difference therebetween, and a PWM (pulse-width modulation) circuit 124 generates a PWM signal MW of a predetermined frequency having a pulse width in conformity with the error signal. The PWM signal MW is fed as a switching control signal via a drive circuit 126 to the switching element 106.

In the above laser processing apparatus, the output of the laser beam LB may have a phase lag to a large extent, e.g., as much as about 180 degrees relative to the switching control signal MW fed for waveform control from the PWM circuit 124 to the switching element 106.

For this reason, to stabilize the waveform control feedback loop, a phase compensation circuit, consisting of a capacitor 128 and a resistor 130 in series, is disposed in parallel with the resistor 120 in a feedback circuit of the operational amplifier 114 so as to strengthen the negative feedback of, esp., high frequency components to thereby compensate a large phase lag almost likely to reverse the phase as described above.

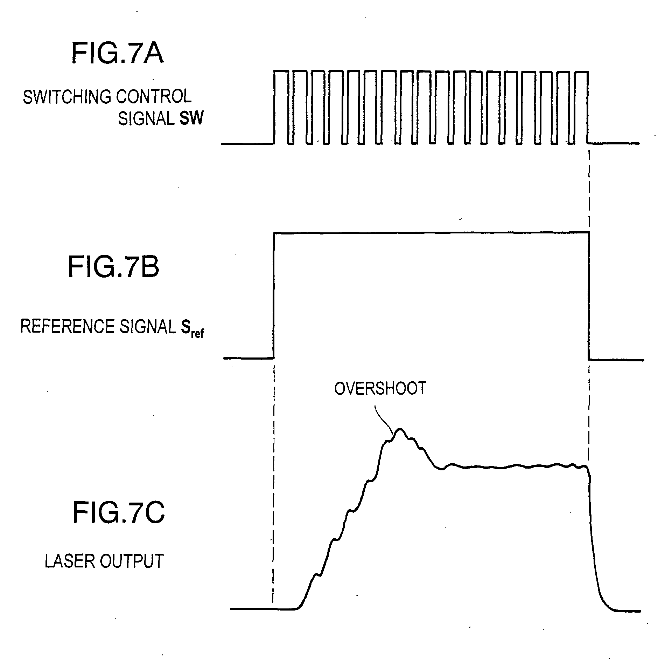

However, this may result in lowering of the gain of the error amplifier 122, esp., gain of high frequency components. For this reason, upon the rise of the laser beam LB, both the measured-value-of-laser-output signal ML and the reference signal M_{ref} tend to contain a plenty of high frequency components, so that the gain or sensitivity of the error signal er for the error (difference) between the respective high frequency components may become lower with a reduced response speed of the PWM circuit 124. This may often bring about a slow rise of the laser output as shown in Figs. 7A to 7C and an overshoot as its reaction with impaired accuracy and reliability in the waveform control. Also from the viewpoint of laser processing quality, it was undesirable.

### SUMMARY OF THE INVENTION

The present invention was conceived in view of such problems involved in the prior art. It is therefore an object of the present invention to provide a laser processing apparatus having enhanced accuracy or reliability in the laser output waveform control.

It is another object of the present invention to provide a laser processing apparatus having improved laser output rise characteristics.

In order to attain the above objects, according to one aspect of the present invention there is provided a laser processing apparatus having a laser oscillation unit exciting a solid-state laser medium by energy of an excitation light emitted from an excitation light source to thereby oscillatorily output a laser beam, a laser power supply unit supplying a power to the excitation light source, and laser output measurement means measuring an output of the laser light, the output of the laser light being controlled on the basis of an error between a feedback signal and a preset reference value, the feedback signal being a laser power measured value from the laser output measurement means, the laser processing apparatus comprising power measuring means arranged to measure a power supplied to the excitation light source, wherein the feedback signal is corrected by an AC component of a signal indicative of a power measured value from the power measuring means so as to control the output of the laser light.

In the above configuration, the measured-value-of-laser-output signal or the feedback signal whose phase significantly lags relative to the control signal is corrected by the AC component of the measured-value-of-power signal substantially in phase with the control signal whereby the feedback signal can have a compensated phase to stabilize the power feedback loop.

In another aspect, the reference value may be corrected by an AC component of the measured-value-of-power signal to control the output of the laser light. Alternatively, arrangement may be such that in place of the power measuring means there are provided current measuring means for measuring a current supplied to the excitation light source so that the feedback signal can be corrected by an AC component of a signal indicative of a power measured value from the power measuring means to thereby control the laser light output. As an alternative, the reference value may be corrected by the AC component of the measured-value-of-power signal to thereby control the laser light output.

Preferably, the laser processing apparatus of the present invention further comprises switching means connected between the laser power supply unit and the excitation light source; and switching control means arranged to provide a switching control of the switching means at a predetermined frequency by pulse-width modulation.

In such a configuration, preferably, the switching means include an adder which adds an AC component of the measured value signal to the feedback signal; an operational amplifier which compares an output signal from the adder with the reference value to amplify an error therebetween; and a capacitor for phase compensation disposed in a feedback circuit of the operational amplifier. Alternatively, the switching means may include a subtractor which subtracts an AC component of the measured value signal from the reference value; an operational amplifier which compares an output signal from the subtractor with the feedback signal to amplify an error therebetween; and a capacitor for phase compensation disposed in a feedback circuit of the operational amplifier. In the present invention, the phase of the feedback signal is compensated by the AC component of the measured-value-of-power signal or the measured-value-of-current signal so as to stabilize the power feedback loop, with the result that it is possible to render rapidly responsive the frequency characteristics of the operational amplifier constituting the error amplifier to thereby provide a stable and rapid-response laser output waveform control.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 is a block diagram showing a principal configuration of a laser processing apparatus in accordance with an embodiment of the present invention;
Fig. 2 is a circuit diagram showing an exemplary configuration of a switching control unit included in the laser processing apparatus of the embodiment;
Fig. 3 is a diagram showing, in comparison with a conventional example, frequency characteristics of an error amplifier included in the switching control unit of the embodiment;
Figs. 4A to 4C are diagrams showing waveforms at respective parts of the laser processing apparatus of the embodiment;
Fig. 5 is a circuit diagram showing a variant of the switching control unit of the embodiment;
Fig. 6 is a block diagram showing a principal configuration of a conventional laser processing apparatus; and
Figs. 7A to 7C are diagrams showing waveforms at respective parts of the conventional laser processing apparatus.

### DESCRIPTION OF THE PREFERRED EMBODIMENT

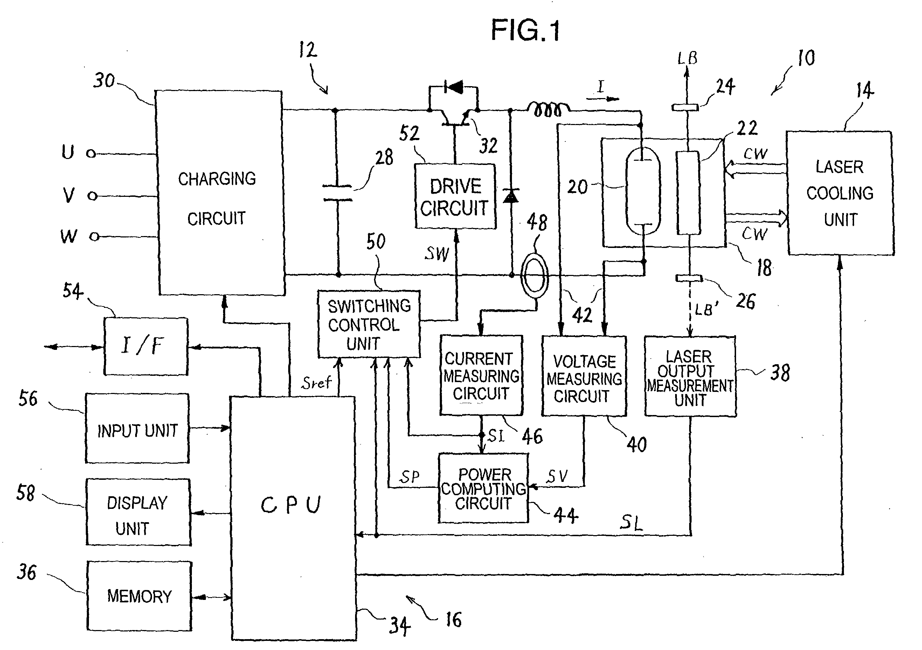

The present invention will now be described with reference to Figs. 1 to 5 which illustrate a presently preferred embodiment thereof in a non-limitative manner.

Fig. 1 depicts the configuration of a principal part of a laser processing apparatus in accordance with the embodiment of the present invention. The laser processing apparatus comprises a laser oscillation unit 10, a laser power supply unit 12, a laser cooling unit 14 and a control unit 16.

The laser oscillation unit 10 includes an excitation lamp 20 acting as an excitation light source and an YAG rod 22 acting as a laser medium which are both arranged within a chamber 18, and a pair of mirrors 24 and 26 disposed in an optical axis of the YAG rod 22 outside the chamber 18.

When the excitation lamp 20 lights and emits an excitation light, the YAG rod 22 is excited by energy of the excitation light. The light emanating onto the optical axis from the opposite ends of the YAG rod 22 is iteratively reflected for amplification between the optical resonator mirrors 24 and 26 and then passes through the output mirror 24 in the form of a pulsed laser beam LB. After passing through the output mirror 24, the pulsed laser beam LB is sent via an optical transmission system not shown consisting of e.g., a reflection mirror and an optical fiber to a laser output unit not shown at a site to be laser processed and is irradiated from the laser output unit onto a workpiece not shown.

The laser power supply unit 12 includes a capacitor 28 for storing laser oscillation powers to be supplied to the laser oscillation unit 10, and a charging circuit 30 for converting a commercial AC, e.g., three-phase AC power supply voltage (U, V, W) into a direct current to thereby charge the capacitor 28 up to a predetermined DC voltage. An output terminal of the laser power supply unit 12, i.e., one terminal of the capacitor 28 is electrically connected via a switching element, e.g., an IGBT (insulated gate bipolar transistor) 32 to the excitation lamp 20.

The laser cooling unit 14 serves to discharge heat generated by the excitation lamp 20 and the YAG rod 22 of the laser oscillation unit 10 to the exterior and is arranged to supply a coolant, e.g., a cooling water CW having a controlled temperature to the laser oscillation unit 10.

The control unit 16 includes a CPU (microprocessor) 34 for providing a control of operations of the entire apparatus and of each unit, a memory 36 for storing various programs, various set values and other data required to cause the CPU 34 to effect predetermined processings, and various measuring means 38 to 48 and a switching control unit 50 for waveform control.

Of the various measuring means, a laser output measurement unit 38 has a photosensor receiving a laser beam LB' leaking backward from the optical resonator mirror 26, and a measuring circuit determining the laser output of the pulsed laser beam LB on the basis of an electric signal output from the photosensor. The laser output measurement unit 38 feeds a measured-value-of-laser-output signal SL acquired from the measuring circuit to both the switching control unit 50 and the CPU 34.

A voltage measuring circuit 40 is electrically connected via voltage sensing leads 42 to opposite ends of the excitation lamp 20 and measures, e.g., an RMS voltage (lamp voltage) applied from the power supply unit 12 to the excitation lamp 20 to feed a signal SV indicative of a measured value of lamp voltage to a power computing circuit 44.

A current measuring circuit 46 receives a current detection signal from, e.g., a Hall CT 48 which is a current sensor fitted to a lamp-current-supplying circuit of the power supply unit 12 and measures an RMS current (lamp current) I supplied to the excitation lamp 20 to feed a signal SI indicative of a measured value of lamp current to both the power computing circuit 44 and the switching control unit 50.

The power computing circuit 44 finds a measured value of lamp power SP by computation on the basis of both the measured-value-of-lamp-voltage signal SV from the voltage measuring circuit 40 and the measured-value-of-lamp-current signal SI from the current measuring circuit 46, to feed a signal SP indicative of a measured value of lamp power to the switching control unit 50.

The switching control unit 50 feeds a switching control signal SW for waveform control via a drive circuit 52 to the IGBT 32. In the laser output waveform control of this embodiment, the switching control unit 50 uses as a main feedback signal the measured-value-of-laser-output signal SL from the laser output measurement unit 38 and as a sub-feedback signal for correction an AC component SPc of the measured-value-of-lamp-power signal SP from the power computing circuit 44 or of the measured-value-of-lamp-current signal SI from the current measuring circuit 46. The switching control unit 50 then compares the feedback signals SL, SPc (SIc) with a reference signal S_{ref} having a desired pulse waveform from the CPU 34 to obtain a comparison error, and generates a switching control signal SW for e.g., PWM so as to nullify the comparison error. The IGBT 32 is thus switching controlled via the drive circuit 52 by the switching control signal SW.

Such a feedback control system provides a control so that the output waveform of the pulsed laser beam LB oscillatorily output from the laser oscillation unit 10 follows the waveform of the reference signal S_{ref}.

The CPU 34 is further associated with a communication interface unit 54, an input unit 56, a display unit 58, etc. The communication interface unit 54 is used for interchanging data or signals with an external device not shown. The input unit 56 includes e.g., key switches arranged on a console panel of the apparatus and is used for e.g., entries of various set values. The display unit 58 includes a display fitted to the console panel and displays various entered set values, various measured values, etc. In Fig. 1, only the measured-value-of-laser-output signal SL from the laser output measurement unit 38 is entered as a measured value into the CPU 34 and is displayable. However, measured value signals obtained by the other measurement units 40, 44 and 46 may be entered into the CPU 34 for display or desired data processing.

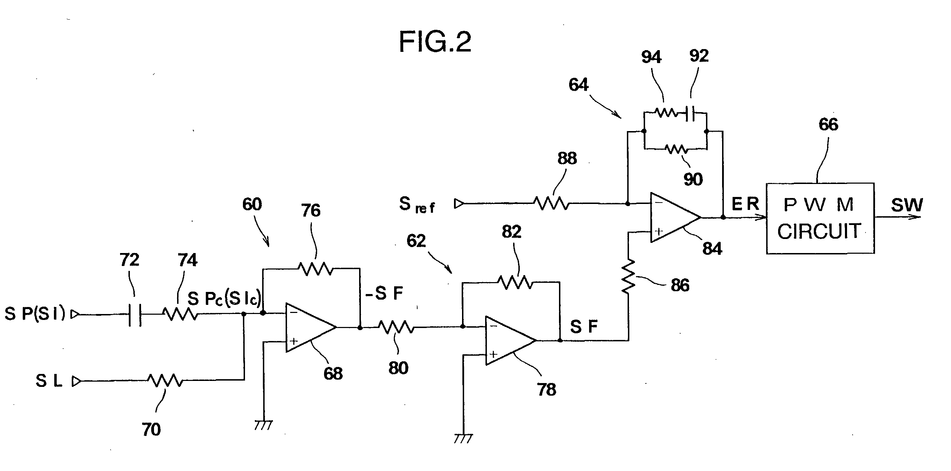

Fig. 2 depicts by way of example the configuration of the switching control unit 50 included in this embodiment. This switching control unit 50 is formed from an analog circuit and includes an adder 60, an inverting circuit 62, and an error amplifier 64 and a PWM circuit 66.

In the adder 60, the measured-value-of-laser-output signal SL from the laser output measurement unit 38 (Fig. 1) is fed as the main feedback signal via an input resistor 70 to an inverting input terminal (-) of an operational amplifier 68. A capacitor 72 accepts the measured-value-of-power signal SP from the power computing circuit 44 (Fig. 1) or the measured-value-of-current signal SI from the current measuring circuit 46 (Fig. 1). The AC component SPc (SIc) of signal SP (SI) passing through the capacitor 72 is fed as the sub-feedback signal via an input resistor 74 to the inverting input terminal (-) of the operational amplifier 68. A non-inverting input terminal (+) of the operational amplifier 68 is connected to the ground potential, with a feedback resistor 76 intervening between the output terminal and the non-inverting input terminal (-).

The thus constituted adder 60 adds the AC component SPc of the measured-value-of-power signal SP or the AC component Sic of the measured-value-of-current signal SI to the measured-value-of-laser-power signal SL and provides a polarity-inverted signal as its output in the form of a corrected feedback signal -SF having an inverted polarity.

The inverting circuit 62 includes an operational amplifier 78, an input resistor 80 and a feedback resistor 82. The inverted polarity corrected feedback signal -SF is polarity inverted by this inverting circuit 62 to obtain a positive polarity corrected feedback signal SF.

The error amplifier 64 includes an operational amplifier 84, a pair of input resistors 86 and 88, and a feedback resistor 90. The operational amplifier 84 has a non-inverting input terminal (+) which receives the corrected feedback signal SF from the inverting circuit 62 through the input resistor 86 and has an inverting input terminal (-) which receives the reference signal S_{ref} from the CPU 34 through the input resistor 88. It is to be noted that the reference signal S_{ref} from the CPU 34 is fed thereto after the conversion into an analog signal by a digital-to-analog converting circuit not shown.

In this error amplifier 64, the operational amplifier 84 has an output terminal which outputs an error signal ER indicative of a difference or error (SF - S_{ref}) between the two input signals SF and S_{ref}. The signal amplification factor is determined by the ratio of the resistance value of the input resistors 86, 88 to the resistance value of the feedback resistor 90.

In this error amplifier 64 as well, to provide a stability to the feedback loop for the waveform control, the feedback circuit of the operational amplifier 84 is provided with a phase compensation circuit consisting of a resistor 90, and a capacitor 92 and a resistor 94 in series which are connected in parallel with the resistor 90. It is to be noted however in this apparatus that a weak negative feedback of, esp., a high frequency component may be provided to the phase compensation circuit due to a small phase shifting (lag) of the corrected feedback signal SF relative to the switching control signal SW output from the PWM circuit 66 as will be described later.

By way of example, the capacitor 128 has had a capacitance of 47,000 picofarads with the resistance value of the resistor 130 set to 500 ohms in the phase compensation circuit of the conventional apparatus (Fig. 6) whereas the capacitor 92 can have a capacitance of 4,700 picofarads with the resistance value of the resistor 130 set to 20 kiloohms in the phase compensation circuit of this apparatus. As a result of such a weakened negative feedback of the high-frequency component in the phase compensation circuit, the error amplifier 64 can have remarkably improved frequency characteristics.

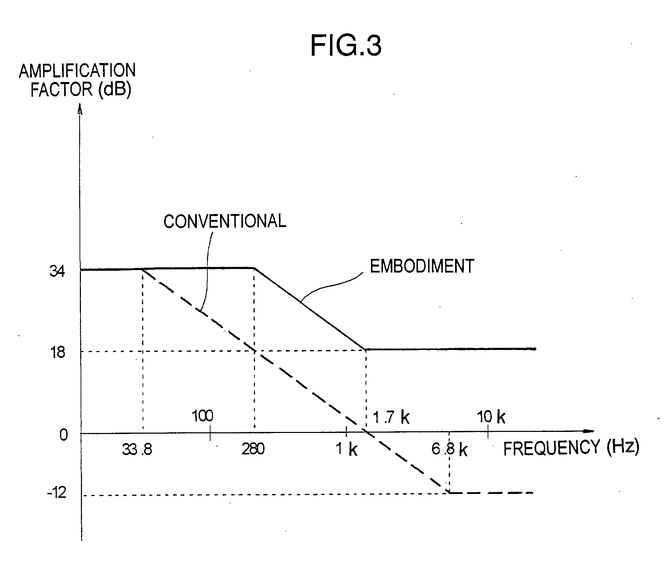

Fig. 3 depicts an example of the frequency characteristics of the error amplifier 64 of this embodiment in comparison with the conventional example (Fig. 1). The resistance values of the input resistors 86, 88 (116, 118) and of the feedback resistor 90 (120) were set to 2 kiloohms and 100 kiloohms, respectively.

The PWM circuit 66 includes a circuit for generating a comparison reference signal e.g., a sawtooth signal of a constant frequency, and a comparator for comparing the error signal ER from the error amplifier 64 with the sawtooth signal to generate a PWM signal, i.e., the switching control signal SW. The pulse width of the switching control signal SW in each switching cycle defines ON time of the IGBT 32 and can increase accordingly as the comparison error ER becomes larger but decrease accordingly as the comparison error ER becomes smaller.

The switching control unit 50 operates as follows in the laser output waveform control of this embodiment.

In each switching cycle, during the ON time of the switching control signal SW or of the IGBT 32, a direct current I is supplied from the laser power supply unit 12 via the switching element 32 to the excitation lamp 20 of the laser oscillation unit 10, to light the excitation lamp 20. In the laser oscillation unit 10, as described above, the YAG rod 22 is excited by an excitation light from the excitation lamp 20 to generate a light for laser, the light being subjected to an optical resonance or amplification by the optical resonator mirrors 24 and 26 and resulting in a laser beam LB. Herein, the variation, i.e., the AC component of the current or power supplied from the laser power supply unit 12 to the excitation lamp 20 is in synchronism with the switching control signal SW or the ON time (pulse duration) which is a control variable of the IGBT 32. On the contrary, the variation in the output of the laser beam LB is not in synchronism therewith, with a possible substantial lag, e.g., of the order of 180 degrees.

The switching control unit 50 of this embodiment uses as the main feedback signal the measured-value-of-laser-power signal SL from the laser output measurement unit 38 and uses as the sub-feedback signal the AC component SPc (SIc) of the measured-value-of-power signal SP from the power computing circuit 44 or of the measured-value-of-current signal SI from the current measuring circuit 46. In the switching control unit 50, the adder 60 adds the two feedback signals SL and SPc (SIc) together and the error amplifier 64 compares the corrected feedback signal SF obtained as a result of the addition with the reference signal S_{ref} to obtain an comparison error (SF - S_{ref}). The PWM circuit 66 then determines the ON time of the IGBT 32 in the next switching cycle depending on the comparison error (SF - S_{ref}).

The corrected feedback signal SF fed to the error amplifier 64 herein is one obtained by correcting (phase compensating) the main feedback signal SL by the sub-feedback signal SPc (SIc) nearly in phase with the switching control signal SW, the main feedback signal SL lagging to a larger extent accordingly as it becomes reversed in phase relative to the switching control signal SW. This assures a high stability in the waveform control feedback loop. For this reason, improved frequency characteristics and improved response speed are achieved with negative feedback of, esp., high-frequency component weakened by the phase compensation circuit (92, 94) of the error amplifier 64 as described above.

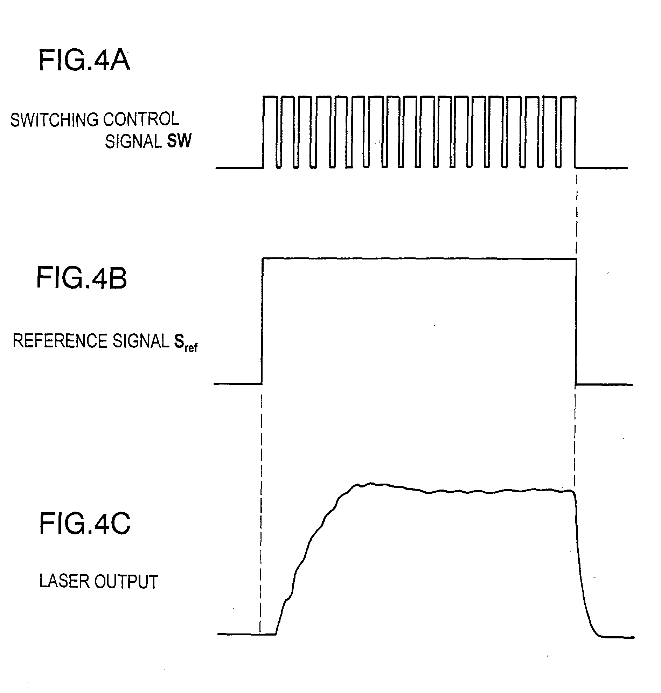

Thus, as depicted in Figs. 4A to 4C, this embodiment is capable of effecting a stable and rapid rise in the output of the pulsed laser beam LB and eliminating any overshoot. Such enhanced accuracy and stability of the laser output waveform control can lead to improved laser processing quality.

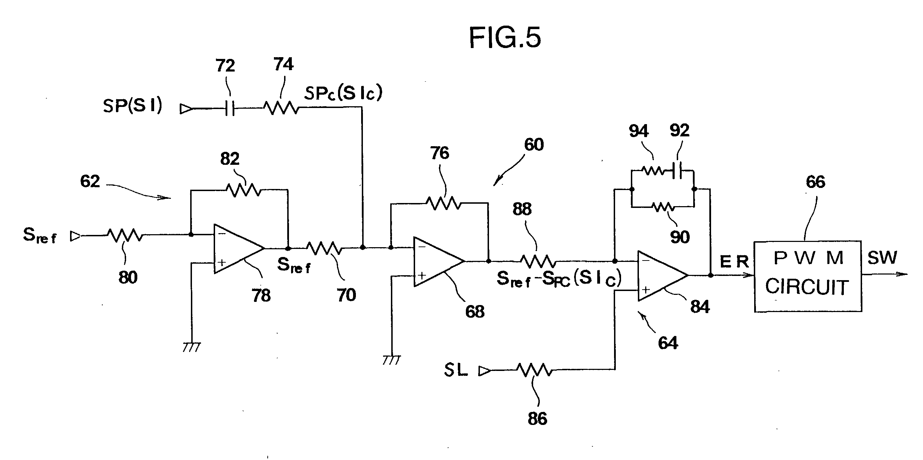

Fig. 5 depicts a variant of the switching control unit 50 included in this embodiment. In the diagram, identical reference numerals are given to elements having similar configurations to those of Fig. 2.

In this variant, the reference signal S_{ref} is passed through the inverting circuit 62 and thereafter added to sub-feedback signal SPc (SIc) by the adder 60 to obtain a first comparison error {S_{ref} - SPc (SIc)}. That is, the inverting circuit 62 and the adder 60 make up a subtractor for subtracting the sub-feedback signal SPc (SIc) from the reference signal S_{ref}. Then, in the error amplifier 64, the first comparison error {S_{ref} - SPc (SIc)} is fed to the inverting input terminal (-) of the operational amplifier 84 whilst the main feedback signal SL is fed to the non-inverting input terminal (+) to obtain a second comparison error {SL + SPc (SIc) - S_{ref}}. The second comparison error is the same result as in the above embodiment, allowing the same error signal ER to be fed to the PWM circuit 66.

Although the preferred embodiment of the present invention has been set forth hereinabove, the present invention may variously be changed or modified based on the technical idea thereof. For example, the configurations and operative functions of the laser oscillation unit 10, laser power supply unit 12 and control unit 16 are not limited to those in the above embodiments, but instead may variously be altered. Although the above embodiment has employed the PWM as the switching control system, any other switching control system suited to the feedback loop is also available.

According to the laser processing apparatus of the present invention, as set forth hereinabove, the feedback signal (laser output measured value) or the reference value is corrected by the AC component of the power or the current supplied from the laser power supply unit to the excitation light source of the laser oscillation unit to provide a power feedback control, whereby it is possible to effect a stable and rapid-response laser power waveform control and especially to improve the rise characteristics of the laser output.

## Claims

1. A power feedback laser processing apparatus having a laser oscillation unit exciting a solid-state laser medium by energy of an excitation light emitted from an excitation light source to thereby oscillatorily output a laser light, a laser power supply unit supplying a power to said excitation light source, and laser output measurement means measuring an output of the laser light, the output of the laser light being controlled on the basis of an error between a feedback signal and a preset reference value, said feedback signal being a measured value of laser power from said laser output measurement means, said laser processing apparatus comprising:
power measuring means arranged to measure a power supplied to said excitation light source, wherein
said feedback signal is corrected by an AC component of a signal indicative of a measured value of power from said power measuring means so as to control the output of the laser light.

2. A power feedback laser processing apparatus having a laser oscillation unit exciting a solid-state laser medium by energy of an excitation light emitted from an excitation light source to thereby oscillatorily output a laser light, a laser power supply unit supplying a power to said excitation light source, and laser output measurement means measuring an output of the laser light, the output of the laser light being controlled on the basis of an error between a feedback signal and a preset reference value, said feedback signal being a measured value of laser power from said laser output measurement means, said laser processing apparatus comprising:
power measuring means arranged to measure a power supplied to said excitation light source, wherein
said reference value is corrected by an AC component of a signal indicative of a measured value of power from said power measuring means so as to control the output of the laser light.

3. A power feedback laser processing apparatus having a laser oscillation unit exciting a solid-state laser medium by energy of an excitation light emitted from an excitation light source to thereby oscillatorily output a laser light, a laser power supply unit supplying a power to said excitation light source, and laser output measurement means measuring an output of the laser light, the output of the laser light being controlled on the basis of an error between a feedback signal and a preset reference value, said feedback signal being a measured value of laser power from said laser output measurement means, said laser processing apparatus comprising:
current measuring means arranged to measure a current supplied to said excitation light source, wherein
said feedback signal is corrected by an AC component of a signal indicative of a measured value of current from said current measuring means so as to control the output of the laser light.

4. A power feedback laser processing apparatus having a laser oscillation unit exciting a solid-state laser medium by energy of an excitation light emitted from an excitation light source to thereby oscillatorily output a laser light, a laser power supply unit supplying a power to said excitation light source, and laser output measurement means measuring an output of the laser light, the output of the laser light being controlled on the basis of an error between a feedback signal and a preset reference value, said feedback signal being a measured value of laser power from said laser output measurement means, said laser processing apparatus comprising:
current measuring means arranged to measure a current supplied to said excitation light source, wherein
said reference value is corrected by an AC component of a signal indicative of a measured value of current from said current measuring means so as to control the output of the laser light.

5. The laser processing apparatus according to any one of the preceding claims, further comprising:
switching means connected between said laser power supply unit and said excitation light source; and
switching control means arranged to provide a switching control of said switching means at a predetermined frequency by pulse-width modulation.

6. The laser processing apparatus according to claim 5, wherein
said switching means include:
an adder which adds an AC component of said signal of measured value to said feedback signal;
an operational amplifier which compares an output signal from said adder with said reference value to amplify an error therebetween; and
a capacitor for phase compensation disposed in a feedback circuit of said operational amplifier.

7. The laser processing apparatus according to claim 5, wherein
said switching means include:
a subtractor which subtracts an AC component of said signal of measured value from said reference value;
an operational amplifier which compares an output signal from said subtractor with said feedback signal to amplify an error therebetween; and
a capacitor for phase compensation disposed in a feedback circuit of said operational amplifier.
